# EUROPEAN PATENT APPLICATION

(11) **EP 2 541 046 A1**
(43) Date of publication of application: **02.01.2013**
(21) Application number: 11746888.4
(22) Date of filing: 18.02.2011
(51) Int. Cl.: F03D 1/00, F03D 11/04

(54) **BLADE-HANDLING TOOL**

(30) Priority: 25.02.2010 ES 201000225
(71) Applicant: Gamesa Innovation & Technology, S.L., 31621 Sarriguren (Navarra) (ES)
(72) Inventor: COLOMA FERNANDEZ, Gonzalo, 31621 Sarriguren (Navarra) (ES); GAMINDE LARRETA, Beinat, 48170 Zamudio (bizkaia) (ES)
(86) International application number: PCT/ES2011/000036
(87) International publication number: WO 2011/104395

(57) **Abstract**

**Summary.**

This handling tool for blades (11) comprises two semi-covers (1) hinged (2) on the leading edge, with enclosures on the trailing edge and double internal wall. A part (10) of the double wall is shifted towards the inside of the existing gap, reducing its volume and, with its movement, trapping the blade (11) without damaging it. The external part of each semi-cover (1) has several shafts (6) incorporating a retaining system that permits blade rotation (11) securely and at a controlled speed. The cited rotation control mechanism (8) is fit onto several ends that are supplemented with several cables (4) that raise and lower the blade (11) as necessary.

## Description

### Object of the invention.

The invention describes a tool to apply on the blade of a wind turbine so as to permit its handling and turning, controlling the speed of the rotation maneuvers.

### Background of the invention.

Wind blades are joined to the wind turbine's hub by a multi-point mechanical union secured with bolts. This assembly is realized "in situ" and requires the involvement of a crane. One of the most important factors when executing wind turbine assembly and maintenance is the expenses incurred from having to move cranes. Moving this type of heavy machinery in areas accessed with a certain degree of difficulty is frequent. Likewise, terrains adjacent to the wind turbine, when impassable, occasionally limit or encumber installation of the complete rotor assembly on the ground for subsequent elevation, thus blades are usually raised as a whole.

There are solutions tending to forgo the use of auxiliary cranes for handling blades. The known state of the art includes Patent EP01507975B1, presenting a method consisting of mounting the rotor with 2 blades and raising this assembly to secure it to the low-speed shaft. Subsequently, the remaining blade is lifted by a crane and then connected to the rotor, and a tool gripping the blade permitting its maneuvering is used when raising this third blade. Patent WO04067954A1 uses the hub as a fastening element to raise the blades and includes a flexible element that adjusts to the blade and safeguards fastening with a rope that secures the tool around the blade

Nonetheless, the use of a structural tool for handling necessitates the inclusion of elements that protect the blade from damage, a question that has not been addressed adequately in the patent EP. Furthermore, the use of flexible materials must include elements that permit blade maneuvering and rotation. Patent PCT has likewise failed to address this question.

In seeking the solution to prevent blade damage during fastening, and to adapt the tool to permit rotational control during raising and lowering operations, the following invention has been conceived.

### Description of the invention

The tool is an element comprising
- two semi-covers coupled together, the inside of which comprises moving elements to fasten the blade without damaging it and
- a rotation control mechanism that is essentially based on an adjustable damping-retention system. This mechanism is fit by several ends to the corresponding cables.

An object of this invention is to incorporate a moving part inside the tool to compress the blade. Another object of the invention is to enable wall movement to be carried out by the action of a pneumatic chamber activated from the exterior, inflating or deflating until an adequate pressure is reached or by a system based on rods with a worm drive sliding guide on one side and an elastic support on the opposing side. The worms are activated by an electric motor causing the sliding end of the rods move towards the interior thus pushing a plate that is in contact with the blade, and the elastic support is made of a gas or spring energy accumulation system that keeps the force on the blade compress mechanism stable.

An object of the invention is the use of the cited tool to handle the blades, assuring their integrity, from the transport area to its anchoring in the wind turbine hub and vice versa. Capable of being used during wind turbine assembly and likewise during its maintenance.

Another object of the invention concerns the tool being capable of opening and closing to cover the blade in its entire perimeter, incorporating means of sliding the blade through the tool seeking its ideal centering and adding the previously-cited moving elements that secure the blade to the tool keeping the blade shells from damage.

Another object of the invention is to combine the tool and its hoisting cables forming part of the rotation mechanism with the halyards controlled by the operators and that are fastened to the blade tip and root assisting in rotation maneuver control and making blade handling more effective.

### Brief description of the drawings.

With a view to explaining the constituents of the tool, its union with the blade, and its maneuvering capacity, the following figures have been attached:
Figure 1 shows an exploded view of the main elements that make up the tool.
Figure 2 is a perspective view of the tool with the hoisting elements and the adjustable damping-retention system.
Figure 3 constitutes a transversal section of the tool, displaying its inner working and the fitting of the blade inside the tool.
Figure 4 presents the same transversal section of the tool as in the previous figure, showing another practical embodiment for securing the blade.

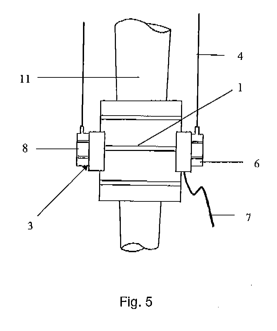

Figure 5 shows a detail of the blade positioned inside the tool.

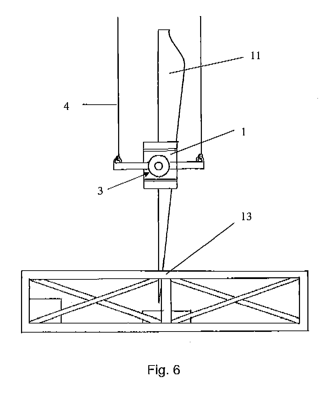

Figure 6 shows a blade hoisted from the storage container by the invented tool.

### Description of the preferential execution

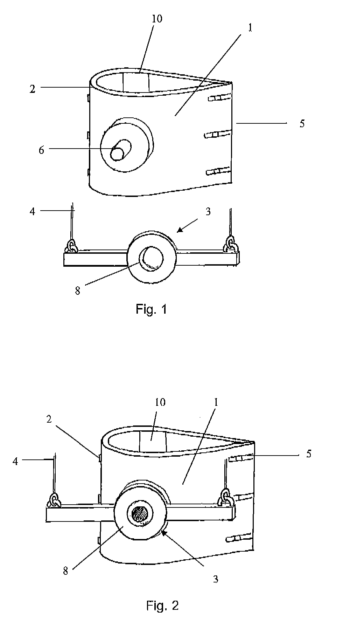

As shown in figure 1, there are the hinged (2) semi-covers (1) on one side and the rotation control mechanism (3) joined to the cables (4) on the other side. The invented tool comprises the union of both elements. The semi-covers (1) are equipped with locks (5) at the ends corresponding to the trailing edge and hinges (2) at the opposing end (corresponding to the leading edge) since it is always easier to open the sharper edge and swing over the widest edge. Both semi-covers (1) have a shaft (6) that protrudes perpendicularly from the walls, and this shaft (6) houses the ring that includes an adjustable damping-retention system (8) and is supplemented with two rigid ends to which the cables (4) are anchored.

Figure 2 shows the unit fully mounted. The two rotation control mechanisms (3) are at the sides of the semi-covers (1) with their corresponding cable pairs (4). The union between the shaft (6) that extends perpendicular to the semi-cover (1) and the ring encompassing the adjustable damping-retention system (8) constitutes the rotation control mechanism (3) that permits, once the blade is raised to a sufficient height so as to keep from impacts against the ground, a contained 90° rotation passing from horizontal to vertical postures or vice-versa.

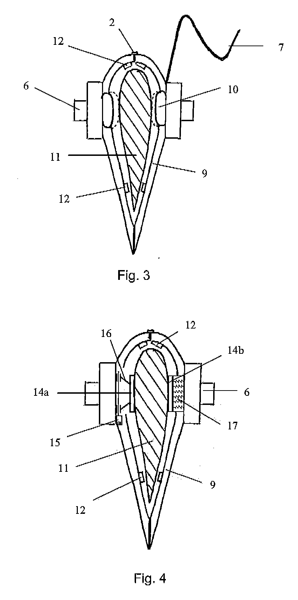

The tool grips the blade profile along a length of between one and two meters. The walls that form the semi-cover (1) are rigid on the outside and mobile on the inside. This double wall (9) houses an externally-activated mobile part. In a first practical embodiment, the mobile part of the inside wall (10) is made up of a pneumatic chamber (10a) activated externally by a hydraulic, pneumatic or electric line (7) coupled to its corresponding energy source, and the movement of this wall creates the compression and fastening of the blade. As shown in figure 3.

In a second practical embodiment shown in figure 4, the mobile part of the inside wall (10) comprises two different elements that work together to properly compress the blade (11) inside the fastening structure: a blade grip activation mechanism (10b) and an elastic support (10c) to control the maximum pressure on the blade.

The activation mechanism (10b) for gripping the blade comprises a worm drive (15) that permits sliding along its length by a pair of opposing rods (16) that cause the compress and release motions on the a surface seated against the structural nucleus of the blade (11). The worm drive (15) has two thread sections, one clockwise and the other counter-clockwise, so that, with a turn of the drive shaft, the guides located on both threads move in opposing directions. Two rods joined by a socket joint allowing rotation at its ends connect the worm drive's sliding guides with the blade compress surface. A turn of the worm shaft induces movement in the guide-rod mechanism, which in turn moves the contact surface towards the blade (11), applying pressure on it or releasing pressure in case it rotates in the opposite direction.

In order to control the maximum pressure on the structural nucleus of the blade (11), the opposing end of the compress surface (10b) is furnished with a reaction surface (10c) that limits the maximum pressure transmitted to it. This system comprise one or various springs (17) with a coefficient of elasticity suitable to support the blade (11) and a system to check the pressure transmitted (not shown in the figure). The pressure checking system indicates the maximum and minimum admissible pressure limits on the blade surface.

When activating any of these pressure devices (10) the inner wall of each semi-cover (1) moves towards the inside of the gap, reducing the inner space of the tool. When the pressure mechanism is activated (10) the inner walls move to come into contact with the blade surface (11). The contact is made between an elastomer placed lengthwise inside of the semi-cover (1), so that the pressure is applied solely on the blade shells along a 40mm-wide strip (width that corresponds to the width of the blade beam) thus keeping from damaging the blade (11); once the tool has coupled on the blade (11), the blade is moved in seeking to adjust its center of gravity on the tool shaft. To avoid rubbing between the walls of the blade and the inside of the tool during the tool coupling and uncoupling processes, a guide system (12) has been added. The guide system (12) can comprise several plastic pads having a very low friction coefficient, or even several inner wheels, preferably made of a plastic material, contributing to keep the blade (11) fully centered before the expansion of the moving parts (10) corresponding to the internal part of the double wall (9).

Figure 4 shows the blade (11) fully hoisted onto a container (13) for blade storage and transport. The blade (11) is already coupled on the inside of the tool and its center of gravity coincides with the rotation shaft (6) of the tool. The weight of the blade (11) rests fully on the tool; hence it is essential that the center of gravity coincides with the rotational point on the adjustable damping-retention system (8) so that the blade (11) rotation maneuver can be controlled from the ground.

The tool's handling method begins with coupling the tool to the blade, which is in turn secured to the wind turbine or set in a container (13) The blade (11) is hoisted to a height sufficient to keep its tip from hitting the ground when turning 90°. During rotation, one or various operators handle several halyards fastened to the blade tip and root, while the rotation control mechanism (3) prevents the rotation from being abrupt due to, for instance, misalignment between the tool rotation shaft and the blade's center of gravity. Rotation is initiated by the personnel on the ground, applying the moment necessary so that blade commences to turn over. The rest of the turning is produced by gravity, with the retaining action of the adjustable damping-retention system (8) and the additional control of the operators and the halyards, the control mechanism (3) is capable of consisting of a clutch or hydraulic damping.

## Claims

1. Blade handling tool that comprises two semi-covers (1) coupled together covering the profile of the wind turbine blade (11), characterized because the external part of the semi-covers (1) are equipped with
- cylindrical shafts (6) to perform tool rotation,
- rotation control mechanism (3),
hinges (2) on the leading edge and locks (5) on the trailing edge in the union of the two semi-covers and
- cables (4) joined to the ends of the rotation control mechanism (3) permitting hoisting-lowering of the unit;
and the inside part of the semi-covers (1) is equipped with
- mobile elements (10) that are housed in the double wall (9) and separate from the inner wall when extended or drawn in
- guiding means (12) for the blade.

2. Blade handling tool according to claim 1, characterized because the mobile elements (10) are formed by elastomers (10a) and are inflated by external elements connected by a line (7) in a hydraulic, pneumatic or electrical system.

3. Blade handling tool according to claim 1, characterized because the mobile elements (10) are formed by a blade grip activation mechanism (10b) and an elastic support (10c) to control the maximum pressure exerted on the blade

4. Blade handling tool according to claim 3, characterized because the blade grip activation mechanism (10b) is moved by the action of a system of rods (16) with a worm sliding guide (15)

5. Blade handling tool according to claim 3, characterized because the elastic support (10c) comprises one or various springs (17) with a coefficient of elasticity suitable to support the blade (11) and a system to check the pressure transmitted.

6. Blade handling tool according to claim 1, characterized because the guiding means (12) are placed on the leading edge and along the trailing edge.

7. Blade handling tool according to claim 6, characterized because the guiding means (12) are formed by pads made of sliding material having a low coefficient of friction.

8. Blade handling tool according to claim 6, characterized because the guiding means (12) are formed by wheels preferably made of elastomer material.

9. Blade handling tool according to claim 1, characterized because the rotation control mechanism (3) that facilitates tool rotation is equipped with clutch-type control means (8).

10. Blade handling tool according to claim 1, characterized because the rotation control mechanism (3) that facilitates tool rotation is equipped with hydraulic damping-type control means (8).

11. Blade handling tool according to claim 1, characterized because the cables (4) join the ends of the rotation control mechanism (3)

12. Tool handling method in claim 1, characterized because
the blade (11) couples on the inside of the tool, which in turns slides it until lining up the center of gravity of the blade (11) and the rotation shaft (6) of the semi-covers
- the mobile elements (10) of the inner wall are moved, activated by electrical, hydraulic or pneumatic means until compressing the blade
- the blade (11) is raised or lowered until a point at which the blade cannot hit the ground, and lifted by means of the halyards secured to the tip and root of the blade, initiating rotation and
- once blade rotation has concluded, it is transferred to a storage element or placed on the hub.
